# EUROPEAN PATENT APPLICATION

(11) **EP 1 959 555 A1**
(43) Date of publication of application: **20.08.2008**
(21) Application number: 07102468.1
(22) Date of filing: 15.02.2007
(51) Int. Cl.: H02P 9/10, H02P 9/36

(54) **Dynamoelectric machine with a brushless exciter and method for operating such a dynamoelectric machine**

(71) Applicant: Alstom Technology Ltd, 5400 Baden (CH)
(72) Inventor: Chay, Pascal, F-25400 Exincourt (FR); Verrier, Michel, F-90850 Essert (FR)

(57) **Abstract**

A dynamoelectric machine (30) comprises a generator (11) with a generator field winding, the generator (11) being connected with its output to a bus bar (14), a brushless exciter (12) which feeds the generator field winding, the exciter (12) comprising an exciter field winding, which can be fed with a DC current from a main DC current source (18, 21) comprising an excitation transformer (18) connected to the bus bar (14) and a subsequent rectifier bridge (21), and an auxiliary DC current source (28, 29), which can be connected to the exciter field winding instead of the main DC current source (18, 21):

The system is improved by the auxiliary DC current source (28, 29) comprising a permanent magnet generator (28), which is mechanically linked to the generator (11), and subsequent rectifying means (29).

## Description

### FIELD OF THE INVENTION

The present invention is about dynamoelectric machines. It relates to a dynamoelectric machine with a brushless exciter according to the preamble of claim 1 and a method for operating such a machine.

### BACKGROUND OF THE INVENTION

Brushless excitation to feed the generator field winding is in widespread use. Brushless excitation is characterised by:
- No maintenance during operation.
- No pollution in the machine.
- Possibility to have ceiling voltage at reduced voltage on the grid or bus bar.

Furthermore, an exciter with its static part being inside the rotating part is characterised by its compactness and a shorter machine hall (see for example the brochure "Alternateur d'excitation a diodes tournantes TKJ" Alsthom atlantique electromécanique, Belfort).

The excitation system consists of a thyristor-controlled rectifier bridge and an excitation transformer. In some applications it is possible to have a permanent magnet generator (PMG) instead of the excitation transformer (see Fig. 19 in: Thanh Tam Tran, "L'excitation compacte, une evolution continue", Alsthom).

Grid disturbances are often initiated by short-circuits in the transmission lines, even close to the power plant. Since the exciter transformer is fed by the generator bus bar, it also sees a lower voltage due to the short-circuit.

Some grid code requires, that the generator unit shall be designed so that it remains connected to the grid and continues its stable operation after isolation of a line side fault within 0.25 seconds. This requires having the generator to be in an overexcited mode for low voltage (see US-A-3,818,317).

On standard excitation, the excitation system can deliver the ceiling voltage, i.e. the maximum exciter voltage, up to about 0.7Uₙ, where Uₙ is the nominal grid voltage. If the voltage is less than 0.7Uₙ, it is impossible to reach the ceiling voltage. On some generators, it is possible to generally replace the exciter transformer by a permanent magnet generator (PMG) to be able to deliver the ceiling voltage even for a voltage less than 0.7Uₙ. However, on large 4 poles generators it is not possible, for mechanical reasons, to shrink a PMG on the shaft.

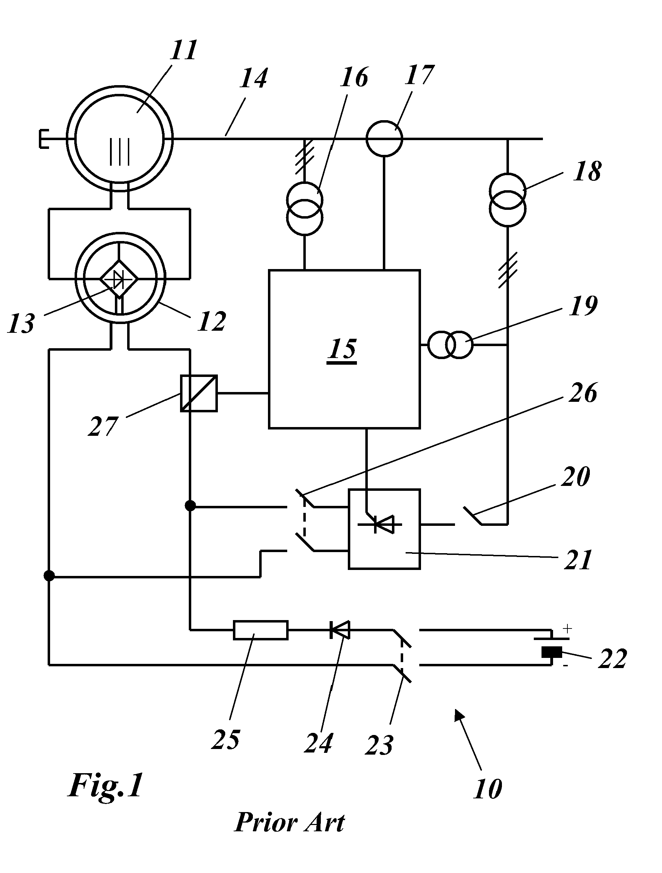

The present solution is to get the ceiling voltage from a battery. Fig. 1 shows the simplified circuit of this solution: The dynamoelectric machine 10 of Fig. 1 comprises a generator 11 the output of which is connected to a bus bar 14, which leads to a grid not shown. The field winding of the generator 11 is fed by a brushless exciter 12, which generates an AC voltage, which is rectified by means of an internal rectifier 13. The field winding of the exciter 12 is supplied with a DC current. During normal operation, this DC current is generated from the bus bar voltage via an excitation transformer 18 and a subsequent thyristor-controlled rectifier bridge 21. An automatic voltage regulator (AVR) 15 monitors the voltage and current on the bus bar 14 via a voltage transducer 16 and a current transducer 17, and the DC current through the exciter field winding by means of a current transducer 27, and regulates the bus bar voltage according to predetermined regulation principles. The automatic voltage regulator 15 is energized from the bus bar 14 via excitation transformer 18 and a separate transformer 19.

The rectifier bridge 21 is connectable at its input side to the excitation transformer 18 by means of a switch 20, and at its output side to the exciter field winding by means of a switch 26. When the ceiling voltage is needed in case of a voltage drop on the bus bar 14, battery 22 can be used as an excitation DC current source by opening switch 26 and closing a switch 23, which connects the battery 22 to the exciter field winding via a diode 24 and a resistor 25.

This solution is not completely acceptable because the voltage from the battery 22 is limited to 220V. It means a voltage of only about 200 V on the exciter field winding, while the ceiling voltage on these generators can be above 220 V.

Other prior art solutions use a charged capacitor to provide the additional exciter current necessary in case of a voltage drop on the grid (US-B1-6,339,316).

Furthermore, other solutions have been proposed, which use a permanent combination of a first DC current source and a second DC current source of the permanent magnet generator type. The US-A-3,863,137 discloses an exciting system for a brushless alternator, in which a field coil of an exciter has a double winding structure, and DC power is supplied to one of the field coil windings from a permanent magnet generator, while DC power proportional to the output voltage of the alternator is supplied to the other field coil winding through a current converter. This arrangement is advantageous in that energizing power can be continuously supplied even in the case of a short-circuit of the alternator terminal and the output voltage subject to momentary fluctuations can be substantially immediately recovered. However, as the permanent magnet generator is continuously operating, it cannot be made small enough to fit into the exciter.

The same is true for a solution according to the US-A-4,032,835, where the base excitation is provided by a pilot exciter, and forcing excitation and fast de-excitation is provided by a supplemental power source. In practice, the supplemental power source may be a transformer connected to the main synchronous generator output terminals, a motor generator set, or by batteries through an inverter. The pilot exciter includes a permanent magnet field member mechanically connected to the shaft for rotation by the prime mover.

### DESCRIPTION OF THE INVENTION

It is therefore an objective of the invention, to provide a dynamoelectric machine with a brushless exciter and a method for its operation, which avoid the disadvantages of the known solutions, provide an improved response to voltage fluctuations and short-circuits on the grid, and can be easily integrated into exciter arrangements of the "TKJ"-type, wherein the static part is concentrically surrounded by the rotating part.

This objective is achieved by a dynamoelectric machine according to claim1 and a method according to claim 9.

According to the invention, the exciter comprises an exciter field winding, which can be fed with a DC current from a main DC current source comprising an excitation transformer connected to the bus bar and a subsequent rectifier bridge; and alternatively with a DC current from an auxiliary DC current source, which can be connected to the exciter field winding instead of the main DC current source, whereby the auxiliary DC current source comprises a permanent magnet generator, which is mechanically linked to the generator, and subsequent rectifying means.

According to one embodiment of the invention, the rectifying means comprise a rectifier bridge, which is a simple diode bridge.

According to another embodiment of the invention, the permanent magnet generator is arranged inside the exciter.

Still another embodiment of the invention is characterized in that the generator and the exciter are mechanically coupled by means of an exciter coupling; and the permanent magnet generator is arranged on the exciter coupling.

According to a further embodiment of the invention the generator is mechanically coupled to a turbine by means of a turbine coupling; and the permanent magnet generator is arranged on the turbine coupling.

Still another embodiment of the invention is characterized in that the main DC current source is connected to the exciter field winding by means of a first switch; and the auxiliary DC current source is connected to the exciter field winding by means of a second switch.

In a further embodiment of the invention the dynamoelectric machine comprises an automatic voltage regulator, which controls the main DC current source in respect to the actual voltage and current on the bus bar; and the first and second switches are controlled by the automatic voltage regulator.

The inventive method for operating the dynamoelectric machine comprises the steps of feeding the exciter field winding with a DC current from the main DC current source, when the voltage on the bus bar is above a predetermined voltage level; and replacing the main DC current source temporarily by the auxiliary DC current source, when the voltage on the bus bar falls below the predetermined voltage level.

A first embodiment of the method according to the invention is characterized in that the main DC current source is connected to the exciter field winding by means of a first switch; the auxiliary DC current source is connected to the exciter field winding by means of a second switch; and the temporary replacement of the main DC current source by the auxiliary DC current source is done by opening the closed first switch and closing the open second switch.

According to another embodiment the predetermined voltage level is about 0.7Uₙ, where Uₙ is the nominal voltage on the grid.

### BRIEF DESCRIPTION OF THE DRAWINGS

The subject matter of the invention will be explained in more detail in the following text with reference to preferred exemplary embodiments, which are illustrated in the attached drawings, in which:
- **Fig. 1**: a schematic diagram of a dynamoelectric machine with brushless exciter according to the prior art;
- Fig. 2: in a diagram similar to Fig. 1 a dynamoelectric machine according to a preferred embodiment of the invention; and
- Fig. 3-5: arrangements of the permanent magnet generator at the dynamoelectric machine in accordance with different embodiments of the invention.

### DETAILED DESCRIPTION OF PREFERRED EMBODIMENTS

The invention starts from a dynamoelectric machine with a brushless exciter configuration of the "TKJ"-type, wherein the static part of the exciter is concentrically surrounded by the rotating part of the exciter. As there is not enough place to install a permanent magnet generator PMG to supply the excitation power during rated conditions, the idea is to have a PMG able to supply only the excitation power during the ceiling conditions (which last for a time period of about 5 s). In this case, the outline of the PMG can be made very small. Such a permanent magnet generator may be called "Impulse PMG", because it will be on load only a few seconds a year.

The PMG shall be associated with its own exciter bridge, because the frequency of the voltage generated will be quite high in comparison with the grid frequency. The exciter bridge can therefore be a very simplified bridge with diodes as rectifying elements, as it is not necessary to have a regulator.

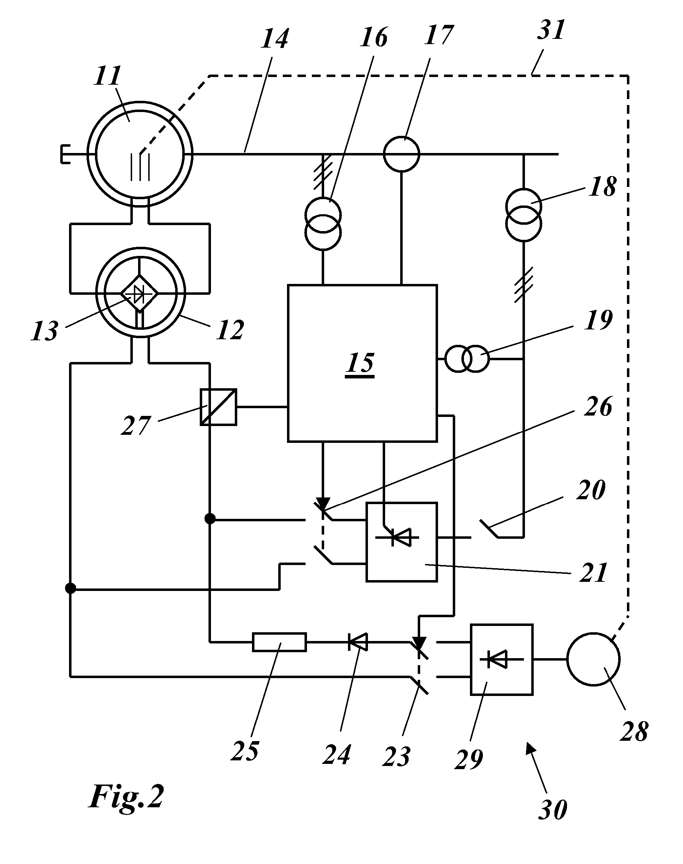

Fig. 2 shows a schematic diagram of a dynamoelectric machine with brushless exciter according to a preferred embodiment of the invention. The configuration of the dynamoelectric machine 30 of Fig. 2 is - with the exception of the auxiliary DC current source - quite similar to the one of Fig. 1: It comprises a generator 11 the output of which is connected to a bus bar 14, which leads to a grid not shown. The field winding of the generator 11 is fed by a brushless exciter 12, which generates an AC voltage, which is rectified by means of an internal rectifier 13. The field winding of the exciter 12 is supplied with a DC current. During normal operation, this DC current is generated from the bus bar voltage via an excitation transformer 18 and a subsequent thyristor-controlled rectifier bridge 21. An automatic voltage regulator (AVR) 15 monitors the voltage and current on the bus bar 14 via a voltage transducer 16 and a current transducer 17, and the DC current through the exciter field winding by means of a current transducer 27, and regulates the bus bar voltage according to predetermined regulation principles. The automatic voltage regulator 15 is energized from the bus bar 14 via excitation transformer 18 and a separate transformer 19.

The rectifier bridge 21 is connectable at its input side to the excitation transformer 18 by means of a switch 20, and at its output side to the exciter field winding by means of a switch 26. When the ceiling voltage is needed in case of a voltage drop on the grid or bus bar 14, respectively, an auxiliary DC current source 28, 29 can be used as an excitation DC current source by opening switch 26 and closing a switch 23, which connects the auxiliary DC current source 28, 29 to the exciter field winding via a diode 24 and a resistor 25.

The auxiliary DC current source 28, 29 comprises a permanent magnet generator (PMG) 28, which is driven by the generator 11 via a mechanical link 31, and a subsequent rectifier bridge 29, which rectifies the AC voltage of the PMG thereby using simple diodes. As the PMG is used only for a few seconds during the year, it can be made quite small. Accordingly, the PMG can be fitted either on the turbine coupling to the generator, or the exciter coupling to the generator, or into the inside of the exciter.

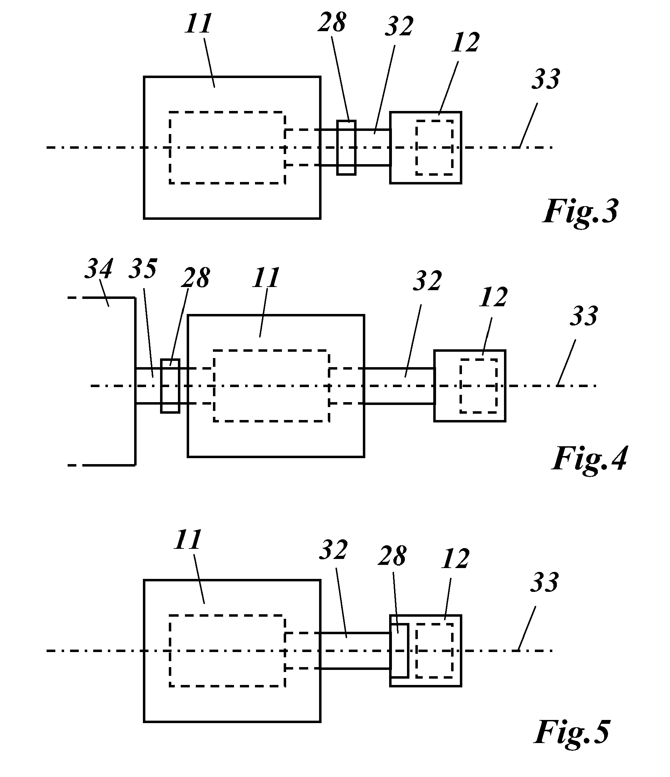

Fig. 3 shows schematically the second of the three alternatives mentioned above: The generator 11 is coupled along an axis 33 to the exciter 12 by means of an exciter coupling 32. The permanent magnet generator 28 is fitted to the exciter coupling 32.

Fig. 4 shows schematically the first of the three alternatives mentioned above: A turbine (gas turbine, steam turbine) 34 is coupled along the axis 33 to the generator 11 by means of a turbine coupling 35. The permanent magnet generator 28 is fitted to the turbine coupling 32.

Fig. 5 shows schematically the third of the three alternatives mentioned above: The permanent magnet generator 28 is fitted into the inside of the exciter 12.

During normal operation, i.e., when the voltage on the bus bar 14 or grid is above a predetermined voltage level, the exciter field winding is fed with a (regulated) DC current from the main DC current source 18, 21. However, when the voltage on the bus bar 14 falls below the predetermined voltage level, the main DC current source 18, 21 is temporarily replaced by the auxiliary DC current source 28, 29 with its permanent magnet generator PMG. This replacement is done by opening the closed first switch 26 and closing the open second switch 23. The predetermined voltage level is preferably about 0.7Uₙ, where Uₙ is the nominal voltage on the grid.

The machine and operating method according to the invention has the following characteristics and advantages:
- The permanent magnet generator PMG supplies the exciter field only in case of a certain voltage drop on the grid.
- There is only one exciter field, controlled by the AVR; in case of the voltage drop the exciter field winding supply with DC current is switched over to the PMG.
- Since the PMG is activated (boosts) only temporarily, it can be kept quite small, such that it fits into the exciter bore of an exciter of the "TKG"-type.

### LIST OF REFERENCE NUMERALS

- 10,30: dynamoelectric machine
- 11: generator
- 12: exciter
- 13,29: rectifier
- 14: bus bar
- 15: automatic voltage regulator (AVR)
- 16: voltage transducer
- 17,27: current transducer
- 18: excitation transformer
- 19: transformer
- 20,23,26: switch
- 21: rectifier bridge (thyristor-controlled)
- 22: battery
- 24: diode
- 25: resistor
- 28: permanent magnet generator (PMG)
- 29: rectifier bridge
- 31: mechanical link
- 32: exciter coupling
- 33: axis
- 34: turbine
- 35: turbine coupling

## Claims

1. Dynamoelectric machine (30), comprising
a generator (11) with a generator field winding, the generator (11) being connected with its output to a bus bar (14);
a brushless exciter (12) which feeds the generator field winding, the exciter (12) comprising an exciter field winding, which can be fed with a DC current from a main DC current source (18, 21) comprising an excitation transformer (18) connected to the bus bar (14) and a subsequent rectifier bridge (21); and
an auxiliary DC current source (28, 29), which can be connected to the exciter field winding instead of the main DC current source (18, 21);
**characterized in that**
the auxiliary DC current source (28, 29) comprises a permanent magnet generator (28), which is mechanically linked to the generator (11), and subsequent rectifying means (29).

2. Dynamoelectric machine as claimed in claim 1, **characterized in that** the rectifying means comprise a rectifier bridge (29).

3. Dynamoelectric machine as claimed in claim 2, **characterized in that** the rectifier bridge (29) is a simple diode bridge.

4. Dynamoelectric machine as claimed in one of the claims 1 to 3, **characterized in that** the permanent magnet generator (28) is arranged inside the exciter (12).

5. Dynamoelectric machine as claimed in one of the claims 1 to 3,
**characterized in that**
the generator (11) and the exciter (12) are mechanically coupled by means of an exciter coupling (32); and
the permanent magnet generator (28) is arranged on the exciter coupling (32).

6. Dynamoelectric machine as claimed in one of the claims 1 to 3,
**characterized in that**
the generator (11) is mechanically coupled to a turbine (34) by means of a turbine coupling (35); and
the permanent magnet generator (28) is arranged on the turbine coupling (35).

7. Dynamoelectric machine as claimed in one of the claims 1 to 6,
**characterized in that**
the main DC current source (18, 21) is connected to the exciter field winding by means of a first switch (26); and
the auxiliary DC current source (28, 29) is connected to the exciter field winding by means of a second switch (23).

8. Dynamoelectric machine as claimed in claim 7, **characterized in that**
the dynamoelectric machine (30) comprises an automatic voltage regulator (15), which controls the main DC current source (18, 21) in respect to the actual voltage and current on the bus bar (14); and
the first and second switches (23, 26) are controlled by the automatic voltage regulator (15).

9. Method for operating a dynamoelectric machine according to one of the claims 1 to 8, comprising the steps of
feeding the exciter field winding with a DC current from the main DC current source (18, 21), when the voltage on the bus bar (14) is above a predetermined voltage level; and
replace the main DC current source (18, 21) temporarily by the auxiliary DC current source (28, 29), when the voltage on the bus bar (14) falls below the predetermined voltage level.

10. Method according to claim 9, **characterized in that**
the main DC current source (18, 21) is connected to the exciter field winding by means of a first switch (26);
the auxiliary DC current source (28, 29) is connected to the exciter field winding by means of a second switch (23); and
the temporary replacement of the main DC current source (18, 21) by the auxiliary DC current source (28, 29) is done by opening the closed first switch (26) and closing the open second switch (23).

11. Method according to claim 9 or 10, **characterized in that** the predetermined voltage level is about 0.7Uₙ, where Uₙ is the nominal voltage on the grid.
